# FASCICULE DE BREVET EUROPEEN

(11) **EP 3 230 106 B1**
(45) Date de publication et mention de la délivrance du brevet: **24.10.2018**
(21) Numéro de dépôt: 15805424.7
(22) Date de dépôt: 01.12.2015
(51) Int. Cl.: B60K 6/365, B60K 6/383, B60K 6/387, B60K 6/48, F16H 3/72, F16H 3/44

(54) **GROUPE MOTOPROPULSEUR POUR L'ENTRAÎNEMENT D'UN VÉHICULE AUTOMOBILE AVEC UN DISPOSITIF DE TRANSMISSION À VARIATION DE VITESSE À TRIPLE TRAIN ÉPICYCLOÏDAL ET EN PARTICULIER GROUPE MOTOPROPULSEUR POUR UN VÉHICULE DE TYPE HYBRIDE**
ANTRIEBSSTRANG ZUM ANTREIBEN EINES KRAFTFAHRZEUGS MIT WECHSELGETRIEBEVORRICHTUNG MIT EINEM DREIFACHEN PLANETENGETRIEBESATZ UND INSBESONDERE EIN ANTRIEBSSTRANG FÜR EIN HYBRIDFAHRZEUG
POWER TRAIN FOR DRIVING A MOTOR VEHICLE WITH A VARIABLE-SPEED TRANSMISSION DEVICE HAVING A TRIPLE PLANETARY GEAR SET AND ESPECIALLY A POWER TRAIN FOR A HYBRID-TYPE VEHICLE

(30) Priorité: 12.12.2014 FR 1462325
(43) Date de publication de la demande: 18.10.2017
(73) Titulaire: IFP Energies nouvelles, 92500 Rueil-Malmaison (FR)
(72) Inventeur: VENTURI, Stephane, 7100 Roiffieux (FR)
(74) Mandataire: IFP Energies nouvelles
(86) Numéro de dépôt international: PCT/EP2015/078195
(87) Numéro de publication internationale: WO 2016/091656

(56) Documents cités:
- EP-A2- 0 716 947
- DE-A1-102007 014 150
- FR-A1- 2 962 697

## Description

La présente invention se rapporte à un groupe motopropulseur pour l'entraînement d'un véhicule automobile avec un dispositif de transmission à variation de vitesse à triple train épicycloïdal et en particulier à un groupe motopropulseur pour un véhicule de type hybride.

Comme cela est déjà connu, ce type de véhicule comporte un groupe motopropulseur qui utilise seul ou en combinaison, comme mode d'entraînement en traction/propulsion, un moteur thermique, généralement à combustion interne, avec un dispositif de variation de vitesse et une machine motrice/réceptrice, comme une machine électrique rotative reliée à une source électrique, telle qu'un ou plusieurs accumulateurs électriques ou batteries.

Cette combinaison permet d'optimiser les performances de ce véhicule, tant au niveau de la réduction des émissions de polluants dans l'atmosphère qu'au niveau de la diminution de la consommation en carburant.

Ainsi, lorsque l'on souhaite déplacer le véhicule avec un couple important sur une grande plage de vitesses tout en limitant la génération de gaz d'échappement et de bruit, comme dans un site urbain, l'utilisation de la machine électrique est privilégiée pour entraîner en déplacement ce véhicule.

Par contre, le moteur thermique est utilisé pour déplacer ce véhicule lors d'utilisations où une puissance d'entraînement élevée et une grande autonomie de fonctionnement sont demandées.

Comme cela est déjà connu par la demande de brevet français N° 2 955 165 du demandeur, le groupe motopropulseur de véhicule automobile comprend un moteur thermique avec un arbre relié à un dispositif de transmission à variation de vitesse comportant un train épicycloïdal de moteur avec un planétaire et une couronne reliés chacun à l'arbre du moteur thermique par un accouplement à commande contrôlée et à une partie fixe du groupe par un accouplement automatique unidirectionnel, et un porte-satellites transmettant la variation de vitesse à l'essieu moteur du véhicule par l'intermédiaire d'une voie de transmission comportant les éléments compris entre l'arbre porte-satellites et l'essieu et qui permettent d'assurer la liaison cinématique entre cet arbre et cet essieu.

De façon à augmenter la capacité de variation de vitesse lors de l'entraînement du véhicule par la machine électrique, le demandeur a associé, au dispositif de transmission à variation de vitesse du document précité, un autre train épicycloïdal reliant le train épicycloïdal de moteur à la voie de transmission de mouvement à l'essieu moteur de ce véhicule, comme cela est décrit dans la demande de brevet français N° 2 962 697 du demandeur, qui divulgue les caractéristiques du préambule de la revendication 1. Dans cette configuration, la voie de transmission comporte également tous les éléments compris entre l'arbre porte-satellites de l'autre train épicycloïdal et l'essieu.

Bien que donnant satisfaction, le demandeur a encore amélioré ce dispositif de variation de vitesse en offrant la possibilité d'augmenter le nombre de rapport de vitesse grâce à un dispositif de transmission à variation de vitesse de conception simple et peu coûteuse.

A cet effet, la présente invention concerne un groupe motopropulseur de véhicule automobile comportant un groupe motopropulseur de véhicule automobile comportant un moteur thermique, un dispositif de variation de vitesse comprenant un train épicycloïdal de moteur avec un planétaire et une couronne reliés chacun à l'arbre du moteur thermique par un accouplement à commande contrôlée et à une partie fixe du véhicule par un accouplement automatique unidirectionnel, un train épicycloïdal de machine placé sur un arbre de machine sensiblement parallèle à l'arbre du moteur et reliant le train épicycloïdal de moteur à une voie de transmission de mouvement à un essieu moteur, ledit train épicycloïdal de machine comprenant un planétaire porté par un arbre de planétaire, une couronne et un porte-satellites, caractérisé en ce que le dispositif de variation de vitesse comprend un train épicycloïdal additionnel et une roue dentée de moteur portée par l'arbre du moteur et reliant cet arbre à une roue dentée de machine portée par le train épicycloïdal additionnel.

Le train épicycloïdal additionnel peut être placé sur l'arbre de machine.

La couronne du train épicycloïdal de machine peut être reliée au porte-satellites du train épicycloïdal additionnel.

Le porte-satellites du train épicycloïdal de machine peut être relié au porte-satellites du train épicycloïdal additionnel.

La couronne du train épicycloïdal de machine peut être portée par la partie fixe du groupe motopropulseur.

La roue dentée de moteur peut être montée folle sur l'arbre de moteur et ledit arbre peut porter un accouplement à commande contrôlée pour la liaison entre cet arbre et ladite roue.

L'accouplement à commande contrôlée peut comprendre un embrayage à disque.

La roue dentée de moteur peut être montée fixe sur l'arbre de moteur.

Le train épicycloïdal additionnel peut comprendre un planétaire porté par un arbre tubulaire de planétaire et la roue dentée de machine peut être montée fixe sur l'arbre de planétaire.

Le train épicycloïdal additionnel peut comprendre un planétaire porté par un arbre tubulaire de planétaire, la roue dentée de machine peut être montée folle sur l'arbre de planétaire et ledit arbre peut porter un accouplement à commande contrôlée pour la liaison entre cet arbre et ladite roue.

L'accouplement à commande contrôlée peut coopérer avec une surface d'appui portée par la roue dentée de machine.

L'accouplement à commande contrôlée peut coopérer avec une surface d'appui portée par la roue dentée de machine ou avec une surface d'appui portée par une partie fixe du groupe motopropulseur.

L'arbre tubulaire de planétaire du train épicycloïdal additionnel peut porter un fourreau tubulaire relié à la partie fixe du véhicule par accouplement automatique unidirectionnel et ledit arbre peut porter un accouplement à commande contrôlée pour la liaison entre cet arbre et ledit fourreau.

Le groupe motopropulseur peut comprendre une machine motrice/génératrice pour réaliser au moins le déplacement du véhicule.

Le rotor de la machine peut être relié à l'arbre de planétaire du train épicycloïdal de machine.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un groupe motopropulseur selon l'invention appliqué à un véhicule hybride et
- les figures 2 à 7 qui illustrent schématiquement des variantes du groupe motopropulseur de la figure 1.

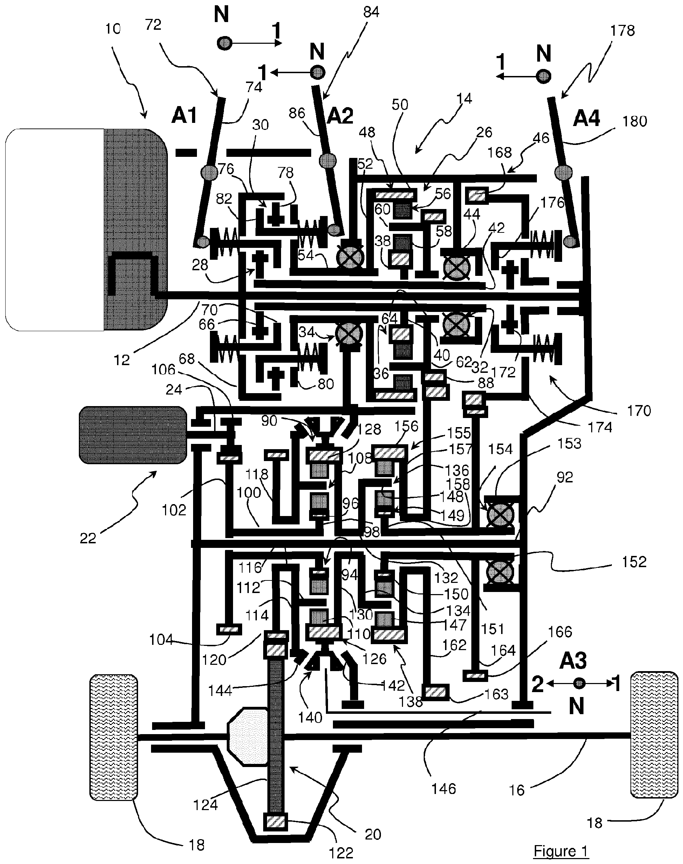

Sur la figure 1, le groupe motopropulseur comprend un moteur thermique 10, notamment un moteur à combustion interne, avec un arbre-moteur 12, ici issu du vilebrequin de ce moteur, un dispositif de variation de vitesse 14. Ce groupe est relié à un essieu moteur 16 qui permet d'entraîner les roues motrices 18 du véhicule, avantageusement par l'intermédiaire d'un pont différentiel 20.

Dans le cadre de l'utilisation pour un véhicule hybride, une machine motrice/réceptrice 22 est associée à ce groupe motopropulseur.

Dans l'exemple qui va suivre, cette machine motrice/réceptrice est une machine électrique avec un rotor 24 et qui est utilisée en tant que moteur électrique pour entraîner les roues du véhicule ou en tant que machine réceptrice pour générer une source de courant servant notamment à recharger les batteries.

Bien entendu, tout autre type de machine motrice/réceptrice peut être utilisée, comme une machine hydraulique ou pneumatique.

Le dispositif de variation de vitesse 14 comprend un train épicycloïdal principal 26, baptisé train épicycloïdal de moteur thermique, avec deux accouplements à commande contrôlée 28, 30, ici des embrayages à disques, et deux accouplements unidirectionnels automatiques, comme des roues libres 32, 34.

Plus précisément, le train épicycloïdal de moteur 26 comprend un planétaire 36 avec une roue 38 dentée extérieurement et portée par un flasque 40. Ce flasque est monté fixement sur un arbre tubulaire 42, dit arbre de planétaire, venant coiffer l'arbre 12 du moteur en étant libre en rotation mais fixe en translation par rapport à celui-ci. Cet arbre prend appui dans un palier 44 porté par une partie fixe 46 du groupe motopropulseur du véhicule, comme le carter de ce groupe, au travers de l'accouplement unidirectionnel 32, baptisé roue libre planétaire.

Ce train comprend également une couronne 48 avec une roue 50 dentée intérieurement, placée concentriquement au planétaire, et un voile 52 relié à un arbre tubulaire 54, dit arbre de couronne, venant entourer l'arbre tubulaire 42 du planétaire tout en étant libre en rotation mais fixe en translation par rapport à celui-ci. Cette couronne est reliée extérieurement à la partie fixe 46 du groupe motopropulseur du véhicule par l'accouplement unidirectionnel 34, baptisé roue libre couronne.

Bien entendu, les deux roues libres 32 et 34 sont placées de manière telle que la couronne 48 et le planétaire 36 ne puissent tourner que dans le même sens et préférentiellement dans le même sens que l'arbre 12 du moteur.

Enfin, ce train épicycloïdal de moteur comprend un porte-satellites 56 avec avantageusement trois satellites 58, en forme de roue à denture extérieure, placés dans un même intervalle angulaire l'un par rapport à l'autre (ici à 120°) et engrenant avec la couronne et le planétaire.

Pour cela, la roue 50 de la couronne, la roue 38 du planétaire et les satellites 58 sont situés dans un même plan, ici dans un plan vertical en considérant la figure 1.

Ces satellites sont portés chacun par un axe horizontal 60 en étant libres en rotation mais fixes en translation sur celui-ci. Ces axes de satellites sont reliés à une paroi verticale 62 reliée à un arbre tubulaire 64, dit arbre de porte-satellites, qui vient entourer l'arbre de planétaire 42 en étant libre en rotation sur celui-ci.

Les extrémités libres des arbres du planétaire et de la couronne portent chacune un accouplement à commande contrôlée 28 et 30, de préférence un embrayage à disque de friction.

Ainsi, l'embrayage 28, dit embrayage de planétaire, comprend un disque de friction 66 porté de manière fixe en rotation mais libre en translation axiale sur l'arbre de planétaire 42. Ce disque de fiction est prévu pour être serré entre un plateau de réaction 68, monté fixement en translation et en rotation sur l'arbre 12 du moteur, et un plateau de pression 70, mobile en translation par rapport à ce plateau de pression tout en étant fixe rotation avec celui-ci. Ce plateau de pression est commandé en déplacement axial par un actionneur de débrayage 72 (actionneur A1), ici sous la forme d'un levier 74 basculant sur un point fixe du groupe motopropulseur, entre une position débrayée de l'embrayage (position N) et une position embrayée (position 1).

Le plateau de pression 68 se poursuit, sur sa périphérie externe, par une paroi horizontale 76 qui porte, de manière fixe en rotation et libre en translation axiale, un autre disque de friction 78, coaxial au disque de friction 66 et qui fait partie de l'autre embrayage 30, dénommé embrayage de couronne.

Ce disque est à même d'être serré entre un plateau de réaction 80, monté fixement en translation et en rotation sur l'extrémité libre de l'arbre de couronne 54, et un plateau de pression 82 mobile en translation axial sous l'action d'un autre actionneur de débrayage 84 (actionneur A2). Comme précédemment mentionné, cet actionneur est sous la forme d'un levier 86 basculant sur un point fixe du groupe motopropulseur entre une position débrayée de l'embrayage (position N) et une position embrayée (position 1).

Tel que cela est mieux illustré sur la figure 1, la paroi verticale 62 du porte-satellites 56 porte une roue 88 dentée extérieurement dont le rôle sera explicitée dans la suite de la description.

Comme mieux visible sur la figure 1, le dispositif de variation de vitesse comprend un autre train épicycloïdal 90, dit train épicycloïdal de machine.

Ce train épicycloïdal de machine 90 est placé sur un arbre 92, dit de machine, sensiblement parallèlement à l'arbre 12 et est porté fixement par la partie fixe 46 du groupe motopropulseur.

Ce train comprend un planétaire 94 qui comprend une roue 96 dentée extérieurement et portée par un flasque 98. Ce flasque est monté fixement sur un arbre tubulaire 100, dit arbre de planétaire de machine, qui vient entourer, librement en rotation mais fixement en translation, l'arbre de machine 92. Cet arbre de planétaire porte, à son extrémité libre, un voile 102 muni à sa périphérie d'une roue dentée extérieurement 104. Cette roue coopère avec une roue dentée 106 portée par le rotor 24 de la machine 22.

Le planétaire 94 coopère avec un porte-satellites 108 avec avantageusement trois satellites 110, en forme de roue à denture extérieure, placés sur des axes de satellites 112 portés par un voile 114 porté par un arbre tubulaire de porte-satellites 116 entourant l'arbre de planétaire 100 et placés dans un même intervalle angulaire l'un par rapport à l'autre (ici à 120°). L'arbre de porte-satellites porte, à son extrémité libre, un voile 118 muni à sa périphérie d'une roue dentée extérieurement 120. La roue 120 coopère avec une roue dentée 122 liée à l'essieu moteur 16 par un voile 124.

Cet ensemble des deux roues dentées forme ainsi une voie de transmission de mouvement entre le train épicycloïdal de machine 90 et l'essieu 16.

Les satellites 110 coopèrent à engrènement avec une couronne 126 qui comprend une roue 128 dentée intérieurement portée par un voile 130 relié à un arbre tubulaire de couronne 132. Cet arbre entoure l'arbre de machine 92 et porte en outre un voile 134 d'un porte-satellites136 qui fait partie d'un train épicycloïdal additionnel 138 qui est monté sur l'arbre de machine 92 en étant concentrique avec le train épicycloïdal de machine 90.

La couronne 126 du train épicycloïdal 90 porte également un accouplement à commande contrôlée 140 (actionneur A3), ici sous la forme d'un synchroniseur à double action.

A titre uniquement d'exemple, cet accouplement comprend un synchroniseur avec deux positions d'engrènement (1, 2) et une position neutre (N). Ce synchroniseur est porté fixement en rotation par la paroi extérieure de la roue 128 de la couronne 126 tout en étant mobile en translation axiale sur celle-ci. Ce synchroniseur est prévu pour coopérer, soit avec une surface d'accouplement fixe 142 portée par une partie fixe 46 du groupe motopropulseur, soit avec une autre surface d'accouplement 144 portée par l'extrémité périphérique du voile 114 du porte-satellites de machine 108.

Pour cela, le synchroniseur est soumis à un moyen de commande 146 lui permettant de réaliser l'accouplement avec la partie fixe du groupe motopropulseur (position 1), avec le porte-satellites (position 2) ou d'être en position neutre sans être en liaison avec aucune des deux surfaces d'accouplement.

Le porte-satellites 136 du train épicycloïdal additionnel 138 comprend trois satellites 147, en forme de roue à denture extérieure, placés sur des axes de satellites 148 portés par le voile 134, et placés dans un même intervalle angulaire l'un par rapport à l'autre (ici à 120°).

Les satellites 148 coopèrent avec un planétaire 149 qui comprend une roue 150 dentée extérieurement et portée par un flasque 151. Ce flasque est monté fixement sur un arbre tubulaire 152, dit arbre de planétaire additionnel, qui vient entourer, librement en rotation mais fixement en translation, l'arbre de machine 92. L'extrémité libre de cet arbre de planétaire est portée par un palier 153 au travers d'un accouplement unidirectionnel automatique, comme une roue libre 154.

Les satellites 147 coopèrent également avec une couronne 155 qui comprend une roue 156 dentée extérieurement et portée par un flasque 157. Ce flasque est monté fixement sur un arbre tubulaire 158, dit arbre de couronne additionnel, qui vient entourer, librement en rotation mais fixement en translation, l'arbre de de planétaire 152. L'extrémité libre de cet arbre de couronne additionnel porte un voile 162 muni à son extrémité d'une roue dentée 163 qui coopère avec la roue dentée 88 portée par le porte-satellites du train épicycloïdal de moteur 26.

L'arbre de planétaire additionnel porte, entre sa roue 150 et son extrémité libre, un voile 164 muni à sa périphérie d'une roue dentée extérieurement 166 de machine qui coopère avec une roue dentée de moteur 168 portée l'arbre 12, ici relié à cet arbre par un accouplement à commande contrôlée 170 sous la forme d'un embrayage à disque.

Lorsque l'embrayage 170 est en position débrayée, et qu'au moins un des deux embrayages 28 ou 30 est en position embrayée, la roue libre 154 permet de bloquer l'arbre 152 de planétaire additionnel

Cet embrayage comprend un disque de friction 172 porté de manière fixe l'arbre-moteur 12. Ce disque de friction est prévu pour être serré entre un plateau de réaction 174, monté librement en rotation et en translation sur l'arbre 12 du moteur et qui porte la roue dentée de moteur 168, et un plateau de pression 176, mobile en translation par rapport à ce plateau de pression tout en étant fixe en rotation avec celui-ci. Ce plateau de pression est commandé en déplacement axial par un actionneur de débrayage 178 (actionneur A4), ici sous la forme d'un levier 180 basculant sur un point fixe du groupe motopropulseur, entre une position débrayée de l'embrayage (position N) et une position embrayée (position 1).

Les différentes configurations de rapports de vitesse vont être détaillées maintenant dans le tableau ci-après.

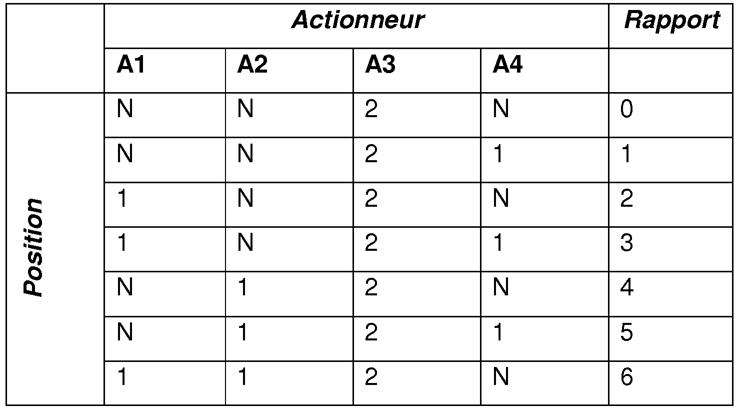

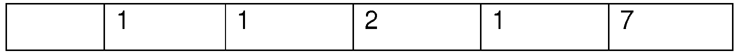

Lorsque la machine 22 n'est pas bloquée, la transmission peut être utilisée en hybride parallèle et cela permet d'utiliser cette machine en mode motrice ou génératrice

Les 7 modes e-CVT (mode d'entraînement par la machine 22) sont disponibles lorsque l'actuateur A3 est en position neutre.

Le premier mode électrique pur est obtenu lorsque l'actuateur A3 est en position 1. Il est alors possible de déplacer le véhicule en marche avant et marche arrière.

Le second mode électrique pur est obtenu lorsque l'actuateur A3 est en position 2 et qu'au moins un des trois embrayages 28, 30 et 170 est en position débrayée. Dans ce mode, seule la marche avant est disponible.

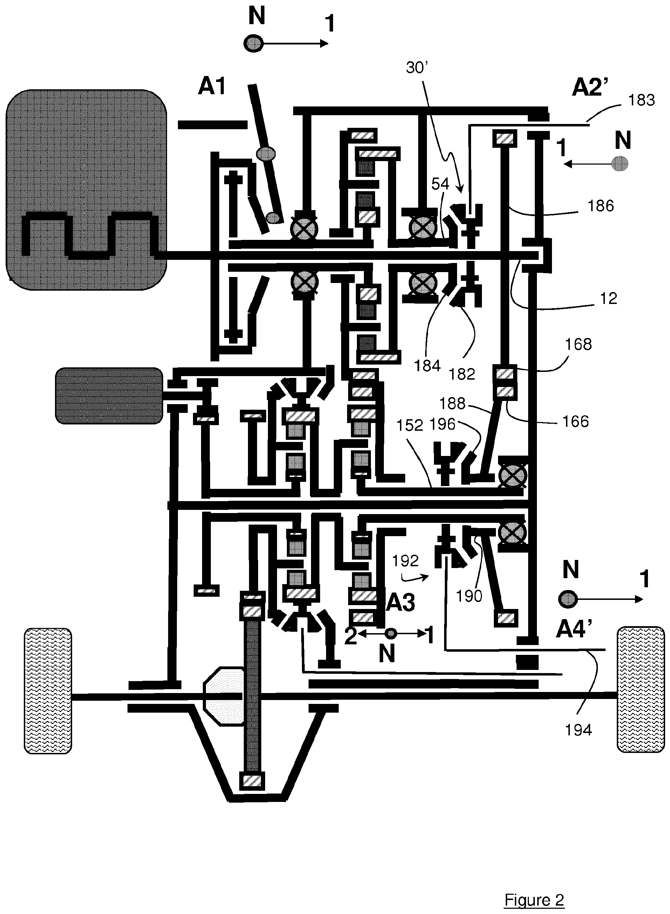

La variante de la figure 2 se distingue de la figure 1 par le fait que l'accouplement l'embrayage à disque 30 de la couronne 48, comme représenté sur la figure 1, a été remplacé par un accouplement à commande contrôlée 30' sous la forme d'un synchroniseur à simple action 182 (actionneur A2'). Ce synchroniseur est fixe en rotation sur l'arbre-moteur 12 mais déplaçable en translation axial sous l'action d'un moyen de commande 183 pour passer d'une position neutre (position N) à une position active (position 1) où ce synchroniseur est en liaison en rotation avec une face de liaison 184 portée par l'arbre tubulaire 54 de couronne.

En outre, la roue dentée de moteur 168 est, dans cette variante, portée par un voile fixe 186 porté par l'arbre moteur 12.

La roue dentée de machine 166 qui coopère avec la roue dentée de moteur 168 est portée par un voile 188 monté sur un arbre tubulaire 190 qui entoure l'arbre tubulaire 152 de planétaire.

La liaison entre les deux arbres tubulaires est assurée par un accouplement à commande contrôlée 192 (actionneur A4') à simple action qui est placé sur l'arbre tubulaire 152 de planétaire du train épicycloïdal additionnel en étant fixe en rotation mais libre en translation et qui est soumis à l'action d'un moyen de commande 194. Ce moyen de commande permet de déplacer le synchroniseur d'une position neutre (position N) à une position active (position 1) où ce synchroniseur est en liaison en rotation avec une face de liaison 196 portée par l'arbre tubulaire 190.

Le fonctionnement de cette variante, tant au niveau de la traction/propulsion électrique que thermique est identique à celui de la figure 1, comme cela est indiqué dans le tableau ci-dessous.

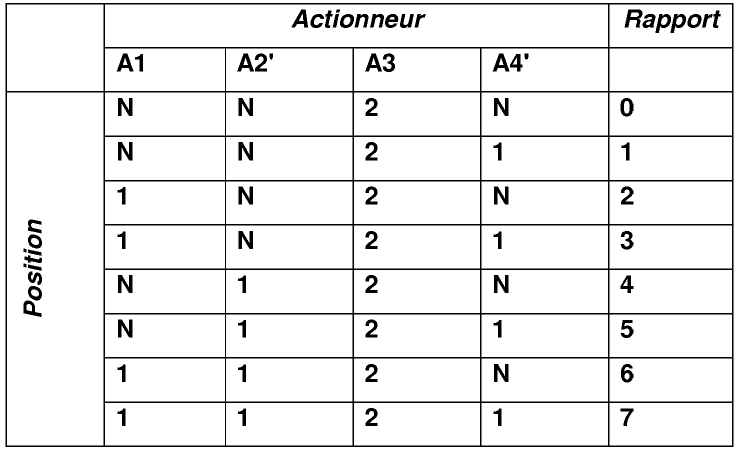

Les 7 rapports hybride parallèle sont identiques aux 7 rapports thermiques purs décrits dans le tableau précédent. Quel que soit le rapport choisi, la machine électrique 22 est en rotation, elle peut donc être utilisée en mode motrice ou génératrice.

Les 7 modes e-CVT sont disponibles lorsque l'actuateur A3 est en position neutre, et que les positions des actuateurs A1, A2' et A4' restent identiques à ceux du tableau précédent.

Le premier mode électrique pur est obtenu lorsque l'actuateur A3 est en position 1. Il est alors possible de déplacer le véhicule en marche avant et marche arrière.

Le second mode électrique pur est obtenu lorsque l'actuateur A3 est en position 2 et qu'au moins un des accouplements 28, 30' et 192 est en position désaccouplée. Dans ce mode, seule la marche avant est disponible.

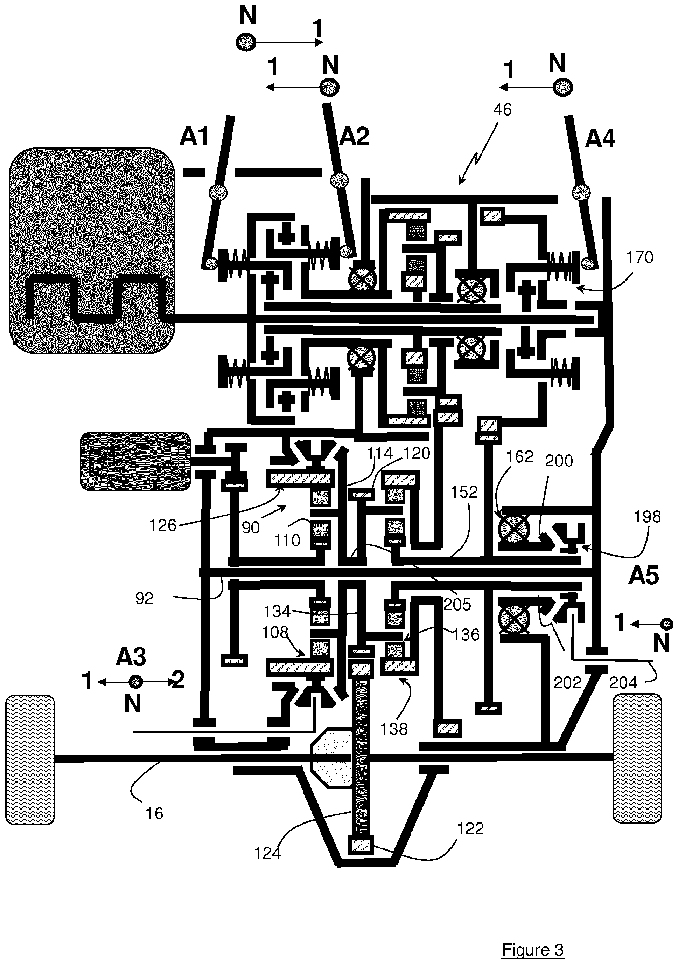

La variante de la figure 3 se distingue de la figure 1 par le fait que l'arbre tubulaire de planétaire 152 du train épicycloïdal additionnel 138 porte, dans sa région d'extrémité, un accouplement à commande contrôlée 198 (actionneur A5), ici sous la forme d'un synchroniseur à simple action.

Ce synchroniseur est monté fixe en rotation mais libre en translation sur l'arbre tubulaire 152 de manière à coopérer avec un flan d'appui 200 porté par un fourreau tubulaire 202. Ce fourreau entoure l'arbre de planétaire 152 et est relié à la partie fixe 46 du groupe motopropulseur par la roue libre 162 de la figure 1.

Lorsque le synchroniseur 198 et le fourreau 202 sont en prise, la roue libre a le même rôle que les deux premières. Elle est bloquée sur la partie fixe 46 lorsque au moins un des embrayages 28 et 30 est en position embrayée, et que l'embrayage 170 est en position débrayée. Cette situation se produit pour trois des sept rapports.

Ce synchroniseur est soumis à un moyen de commande 204 lui permettant de réaliser l'accouplement avec le flan 200 du fourreau 202 (position 1) ou d'être en position neutre sans être en liaison avec aucune surface d'accouplement (position N).

En outre, les deux trains épicycloïdaux 90 et 138 portés par l'arbre de machine 92 sont placés en vis-à-vis de façon à ce que les voiles 114 et 134 des portes-satellites 108 et 136 soient portés par le même arbre tubulaire 205 qui entoure l'arbre de machine 92. Comme mieux visible sur la figure, le voile 134 du porte-satellites 136 porte la roue dentée 120 qui engrène avec la roue dentée 122 portée par le voile 124 lié à l'essieu 16.

De plus, la couronne 126 du train épicycloïdal de machine 90 est portée par sa périphérie externe sur un partie fixe 46 du groupe tout en engrenant avec les satellites 110.

Les différentes configurations de rapports de vitesse vont être détaillées maintenant dans le tableau ci-après.

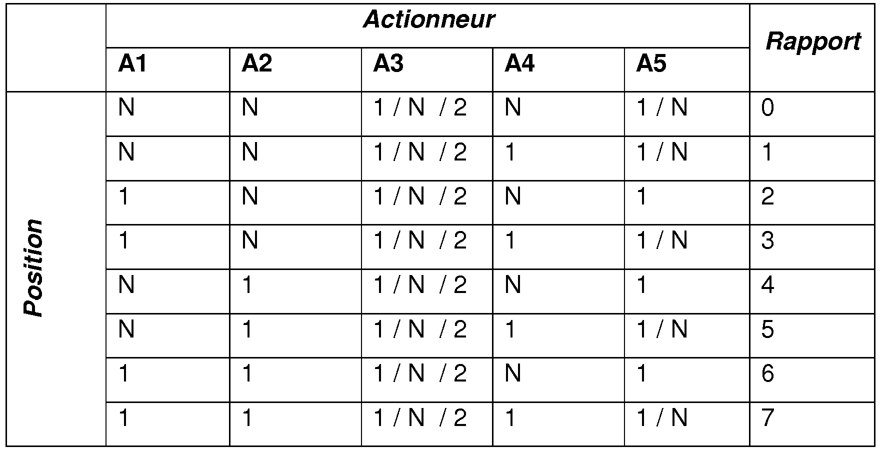

Lorsqu'un des 7 rapports thermiques purs décrits dans le tableau précédent est utilisé, il est possible d'obtenir un fonctionnement en hybride parallèle suivant la position de l'actuateur A3.

Lorsque l'actuateur A3 est en position neutre, le mode hybride parallèle n'est pas disponible, donnant la possibilité de ne pas entrainer la machine électrique à vide.

Lorsque l'actuateur A3 est en position 1, 7 modes hybrides parallèles sont disponibles en associant un des 7 rapports thermiques au rapport électrique court de la machine 22.

Lorsque l'actuateur A3 est en position 2, 7 modes hybrides parallèles supplémentaires sont disponibles en associant un des 7 rapports thermiques au rapport électrique long de la machine 22.

Le premier mode électrique pur est obtenu lorsque l'actuateur A3 est en position 1 et qu'au moins un des trois embrayages 28, 30 et 170 est en position désaccouplée. Dans ce mode il est alors possible de déplacer le véhicule en marche arrière si l'actuateur A5 est en position N et l'actuateur A4 en position débrayée.

Le second mode électrique pur est obtenu lorsque l'actuateur A3 est en position 2 et qu'au moins un des trois embrayages 28, 30 et 170 est en position désaccouplée. Dans ce mode il est alors possible de déplacer le véhicule en marche arrière si l'actuateur A5 est en position N et l'actuateur A4 en position débrayée.

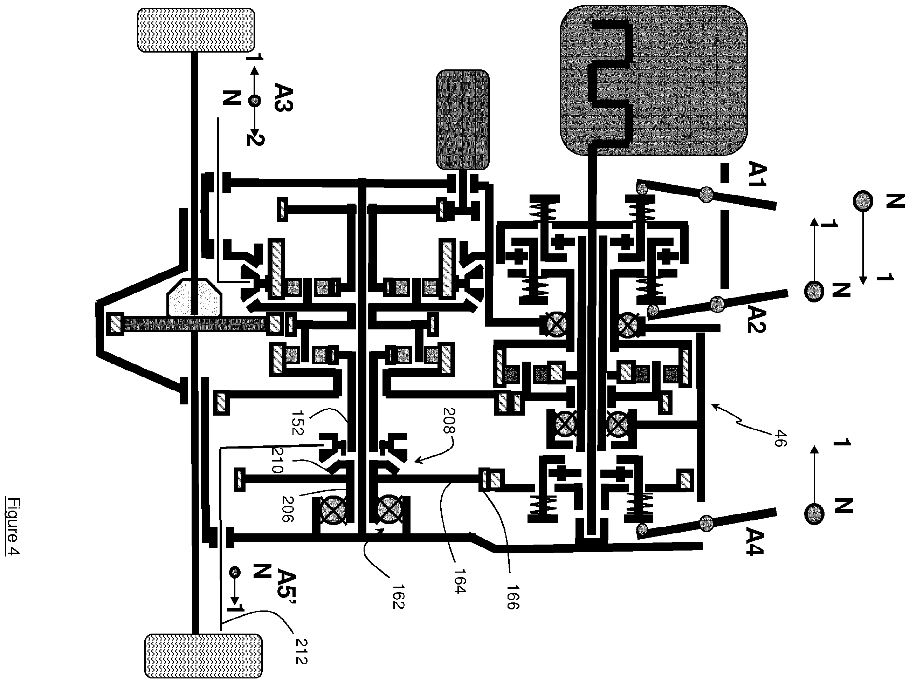

Dans la variante de la figure 4, qui est très voisine de celle de la figure 3, le voile 164 et sa roue dentée de machine 166 sont montés sur un fourreau tubulaire 206 qui entoure l'arbre de machine et qui est relié à la partie fixe 46 du groupe par la roue libre 162.

L'arbre tubulaire de planétaire 152 du train épicycloïdal additionnel porte, en regard du fourreau tubulaire 206, un accouplement à commande contrôlée 208 (actionneur A5') sous la forme d'un synchroniseur à simple action.

Ce synchroniseur est monté fixe en rotation mais libre en translation sur l'arbre tubulaire 152 de manière à coopérer avec un flan d'appui 210 porté par le fourreau tubulaire 206.

Ce synchroniseur est soumis à un moyen de commande 212 lui permettant de réaliser l'accouplement avec le flan 210 du fourreau 206 (position 1) ou d'être en position neutre sans être en liaison avec aucune surface d'accouplement (position N).

Les différentes configurations de rapports de vitesse vont être détaillées maintenant dans le tableau ci-après.

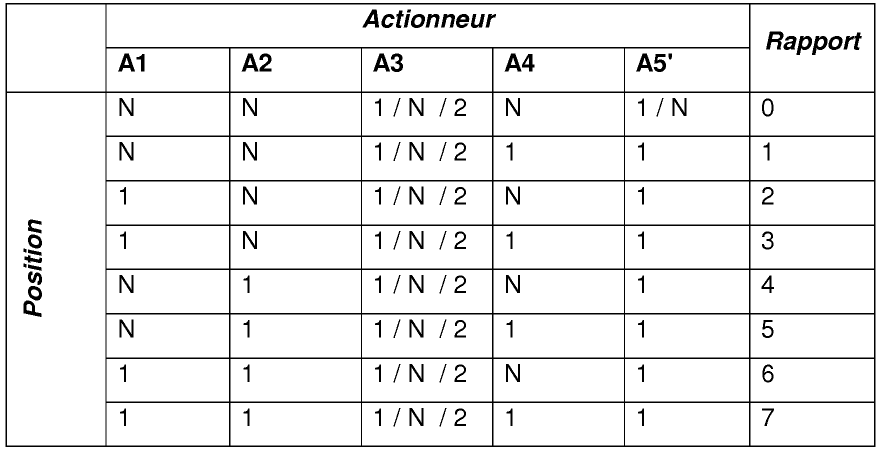

Lorsqu'un des 7 rapports thermiques purs décrits dans le tableau précédent est utilisé, il est possible d'obtenir un fonctionnement en hybride parallèle suivant la position de l'actuateur A3.

Lorsque l'actuateur A3 est en position neutre, le mode hybride parallèle n'est pas disponible, donnant la possibilité de ne pas entrainer la machine électrique à vide.

Lorsque l'actuateur A3 est en position 1, 7 modes hybrides parallèles sont disponibles en associant un des 7 rapports thermiques au rapport électrique court de la machine 22.

Lorsque l'actuateur A3 est en position 2, 7 modes hybrides parallèles supplémentaires sont disponibles en associant un des 7 rapports thermiques au rapport électrique long de la machine 22.

Le premier mode électrique pur est obtenu lorsque l'actuateur A3 est en position 1 et l'actuateur A5' en position N. Dans ce mode, la marche avant et la marche arrière sont disponibles.

Le second mode électrique pur est obtenu lorsque l'actuateur A3 est en position 2 et l'actuateur A5' en position N. Dans ce mode la marche avant et la marche arrière sont disponibles.

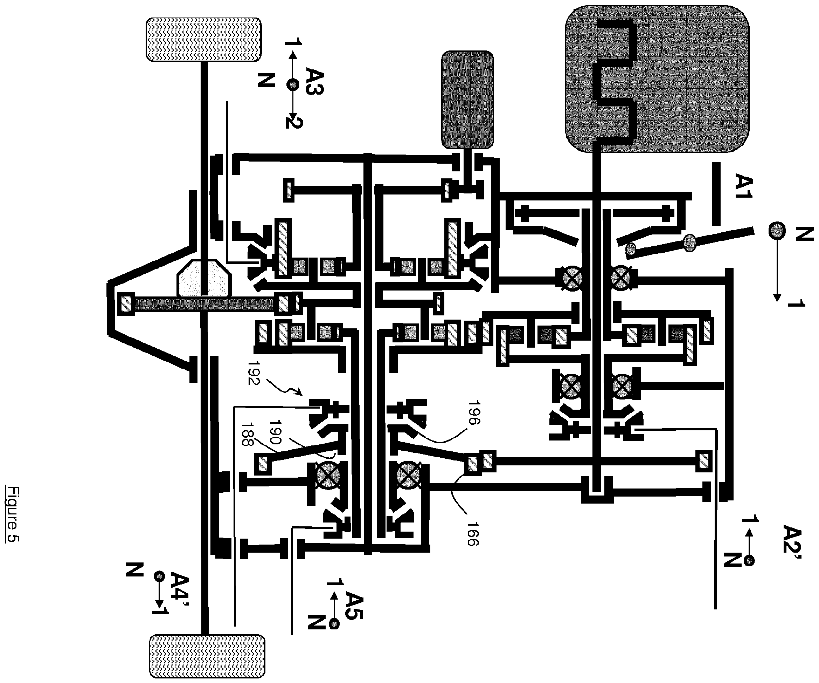

La variante de la figure 5 est voisine de la variante la figure 3 avec la différence selon laquelle l'accouplement à commande contrôle 192 (actionneur A4') de la figure 2 ainsi que le fourreau tubulaire 190 avec son flan 196 portant le voile 188 et la roue denté de machine 166 remplacent le voile 164 et la roue denté 166 de la figure 3.

Les différentes configurations de rapports de vitesse vont être détaillées maintenant dans le tableau ci-après.

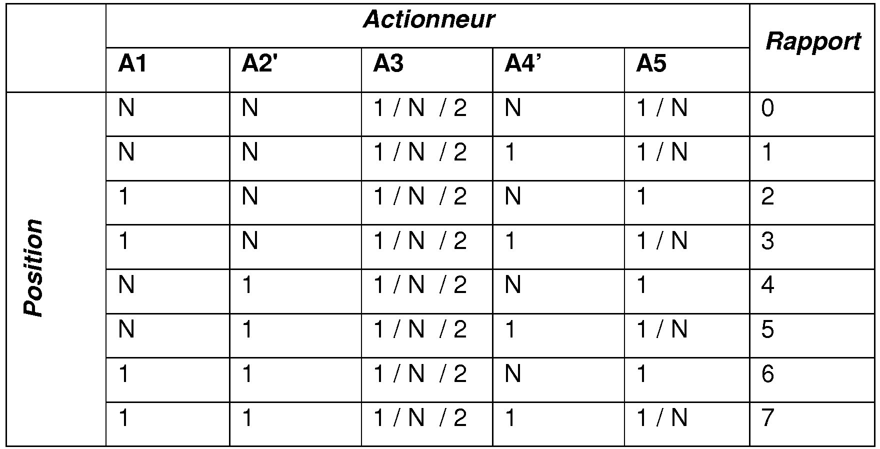

Lorsqu'un des 7 rapports thermiques purs décrits dans le tableau précédent est utilisé, il est possible d'obtenir un fonctionnement en hybride parallèle suivant la position de l'actuateur A3.

Lorsque l'actuateur A3 est en position neutre, le mode hybride parallèle n'est pas disponible, donnant la possibilité de ne pas entrainer la machine électrique à vide.

Lorsque l'actuateur A3 est en position 1, 7 modes hybrides parallèles sont disponibles en associant un des 7 rapports thermiques au rapport électrique court de la machine 22.

Lorsque l'actuateur A3 est en position 2, 7 modes hybrides parallèles supplémentaires sont disponibles en associant un des 7 rapports thermiques au rapport électrique long de la machine 22.

Le premier mode électrique pur est obtenu lorsque l'actuateur A3 est en position 1 et qu'au moins un des trois systèmes d'accouplement 28, 30' et 192 est en position désaccouplée. Dans ce mode, il est alors possible de déplacer le véhicule en marche arrière si les actuateurs A5 et A4' sont en position N.

Le second mode électrique pur est obtenu lorsque l'actuateur A3 est en position 2 et qu'au moins un des trois systèmes d'accouplement 28, 30' et 192 est en position désaccouplée. Dans ce mode il est alors possible de déplacer le véhicule en marche arrière si les actuateurs A5 et A4' sont en position N.

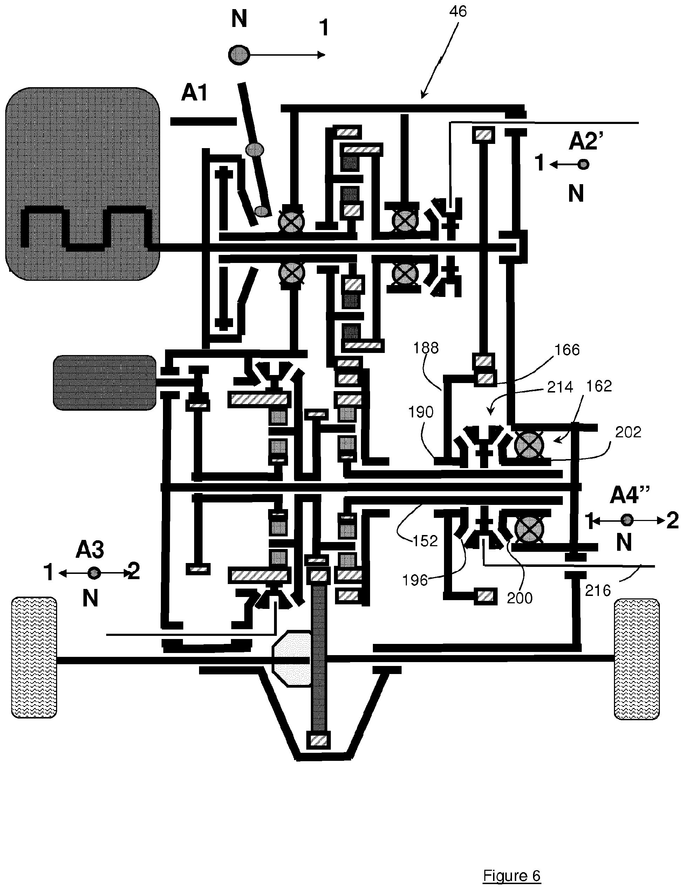

La figure 6 est une variante de la figure 5 avec le regroupement en un seul accouplement à commande contrôlée 214 (actionneur A4") sur la figure 6 des accouplements à commande contrôlée 192 (actionneur A4') et 198 (actionneur A5) de la figure 5.

Cet accouplement 214 comprend un synchroniseur à double action, permettant de relier l'arbre tubulaire 152, soit à l'arbre tubulaire 190 portant le voile 188 muni de la roue dentée de machine 166, soit au fourreau tubulaire 202 porté par la partie fixe 46 du groupe motopropulseur au travers de la roue libre 162.

Ainsi l'accouplement comprend un synchroniseur avec deux positions d'engrènement (1, 2) et une position neutre (N). Ce synchroniseur est porté fixement en rotation par l'arbre tubulaire de planétaire 152 tout en étant mobile en translation axiale sur celle-ci. Ce synchroniseur est prévu pour coopérer, soit avec la surface d'accouplement fixe 196 portée par l'arbre tubulaire 190, soit avec la surface d'accouplement 200 portée par le fourreau tubulaire 202.

Pour cela, le synchroniseur est soumis à un moyen de commande 216 lui permettant de réaliser l'accouplement avec l'arbre tubulaire 190 (position 1), avec le fourreau tubulaire 202 (position 2) ou d'être en position neutre sans être en liaison avec aucune des deux surfaces d'accouplement.

Les différentes configurations de rapports de vitesse vont être détaillées maintenant dans le tableau ci-après.

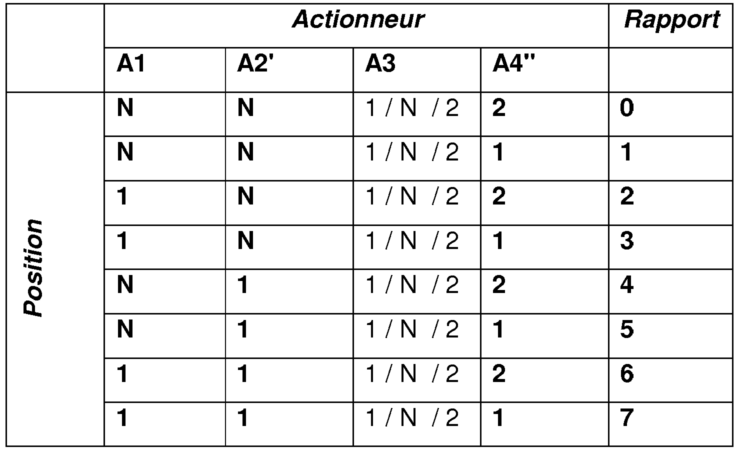

Lorsqu'un des 7 rapports thermiques purs décrits dans le tableau précédent est utilisé, il est possible d'obtenir un fonctionnement en hybride parallèle suivant la position de l'actuateur A3.

Lorsque l'actuateur A3 est en position neutre, le mode hybride parallèle n'est pas disponible, donnant la possibilité de ne pas entrainer la machine électrique à vide.

Lorsque l'actuateur A3 est en position 1, 7 modes hybrides parallèles sont disponibles en associant un des 7 rapports thermiques au rapport électrique court de la machine 22.

Lorsque l'actuateur A3 est en position 2, 7 modes hybrides parallèles supplémentaires sont disponibles en associant un des 7 rapports thermiques au rapport électrique long de la machine 22.

Le premier mode électrique pur est obtenu lorsque l'actuateur A3 est en position 1 et l'actuateur A4" en position N. Dans ce mode la marche avant et la marche arrière sont disponibles.

Le second mode électrique pur est obtenu lorsque l'actuateur A3 est en position 2 et l'actuateur A4" en position N. Dans ce mode la marche avant et la marche arrière sont disponibles.

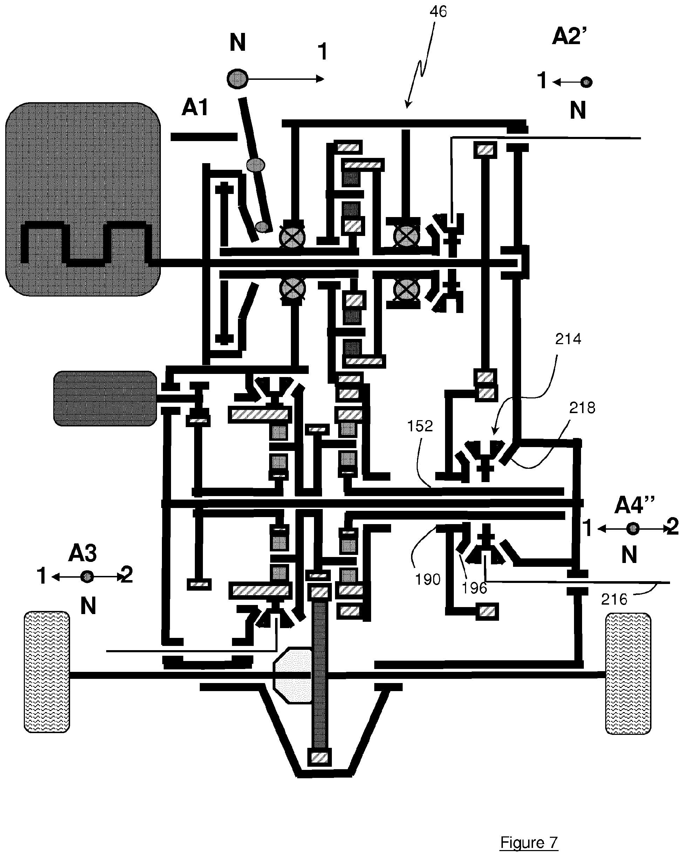

La figure 7 est une variante de la figure 6 dans laquelle le fourreau tubulaire 202 et la roue libre 162 de la figure 6 ont été supprimés et remplacés par une surface d'accouplement 218 portée par une partie fixe 46 du groupe motopropulseur.

Ainsi le synchroniseur 214 peut avoir deux positions d'engrènement (1, 2) et une position neutre (N). Ce synchroniseur est porté fixement en rotation par l'arbre tubulaire de planétaire 152 tout en étant mobile en translation axiale sur celle-ci.

Ce synchroniseur est soumis à un moyen de commande 216 lui permettant de réaliser l'accouplement avec la surface d'accouplement 196 portée par l'arbre tubulaire 190 (position 1), ou avec la surface d'accouplement 218 portée par la partie fixe 46 (position 2) ou d'être en position neutre (position N) sans être en liaison avec aucune des deux surfaces d'accouplement.

Les différentes configurations de rapports de vitesse vont être détaillées maintenant dans le tableau ci-après.

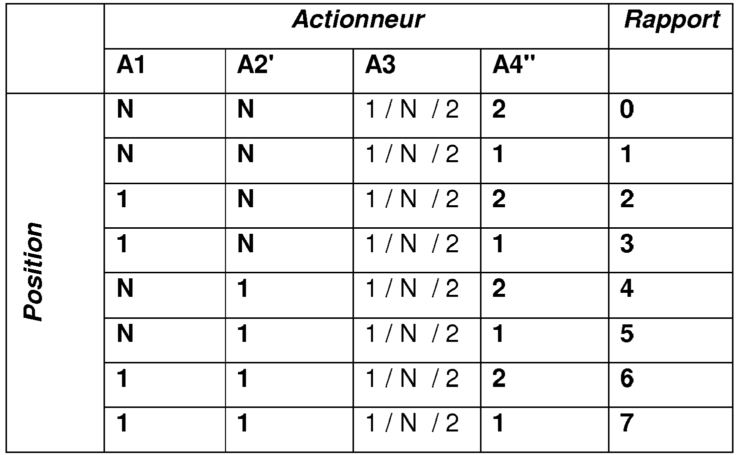

Lorsqu'un des 7 rapports thermiques purs décrits dans le tableau précédent est utilisé, il est possible d'obtenir un fonctionnement en hybride parallèle suivant la position de l'actuateur A3.

Lorsque l'actuateur A3 est en position neutre, le mode hybride parallèle n'est pas disponible, donnant la possibilité de ne pas entrainer la machine électrique à vide.

Lorsque l'actuateur A3 est en position 1, 7 modes hybrides parallèles sont disponibles en associant un des 7 rapports thermiques au rapport électrique court de la machine 22.

Lorsque l'actuateur A3 est en position 2, 7 modes hybrides parallèles supplémentaires sont disponibles en associant un des 7 rapports thermiques au rapport électrique long de la machine 22.

Le premier mode électrique pur est obtenu lorsque l'actuateur A3 est en position 1 et l'actuateur A4" en position N. Dans ce mode la marche avant et la marche arrière sont disponibles.

Le second mode électrique pur est obtenu lorsque l'actuateur A3 est en position 2 et l'actuateur A4" en position N. Dans ce mode la marche avant et la marche arrière sont disponibles.

## Revendications

1. Groupe motopropulseur de véhicule automobile comportant un moteur thermique (10), un dispositif de variation de vitesse (14) comprenant un train épicycloïdal de moteur (26) avec un planétaire (36) et une couronne (48) reliés chacun à l'arbre (12) du moteur thermique par un accouplement à commande contrôlée (28, 30) et à une partie fixe (46) du véhicule par un accouplement automatique unidirectionnel (32, 34), un train épicycloïdal de machine (90) placé sur un arbre de machine (92) sensiblement parallèle à l'arbre (12) du moteur et reliant le train épicycloïdal de moteur (26) à une voie de transmission de mouvement (118, 120, 122, 124) à un essieu moteur (16), ledit train épicycloïdal de machine comprenant un planétaire (94) porté par un arbre de planétaire (100), une couronne (126) et un porte-satellites (108), **caractérisé en ce que** le dispositif de variation de vitesse (14) comprend un train épicycloïdal additionnel (138) et une roue dentée de moteur (168) portée par l'arbre (12) du moteur et reliant cet arbre à une roue dentée de machine (166) portée par le train épicycloïdal additionnel (138).

2. Groupe motopropulseur de véhicule automobile selon la revendication 1, **caractérisé en ce que** le train épicycloïdal additionnel (138) est placé sur l'arbre de machine (92).

3. Groupe motopropulseur de véhicule automobile selon la revendication 1 ou 2, **caractérisé en ce que** la couronne (126) du train épicycloïdal de machine est reliée au porte-satellites (136) du train épicycloïdal additionnel (138).

4. Groupe motopropulseur de véhicule automobile selon la revendication 1 ou 2, **caractérisé en ce que** le porte-satellites (108) du train épicycloïdal de machine est relié au porte-satellites (136) du train épicycloïdal additionnel.

5. Groupe motopropulseur de véhicule automobile selon la revendication 1, **caractérisé en ce que** la couronne (126) du train épicycloïdal de machine est portée par la partie fixe (46) du groupe motopropulseur.

6. Groupe motopropulseur de véhicule automobile selon la revendication 1, **caractérisé en ce que** la roue dentée de moteur (168) est montée folle sur l'arbre (12) de moteur et **en ce que** ledit arbre porte un accouplement à commande contrôlée (170) pour la liaison entre cet arbre et ladite roue.

7. Groupe motopropulseur de véhicule automobile selon la revendication 6, **caractérisé en ce que** l'accouplement à commande contrôlée comprend un embrayage à disque (170).

8. Groupe motopropulseur de véhicule automobile selon la revendication 1, **caractérisé en ce que** la roue dentée de moteur (168) est montée fixe sur l'arbre (12) de moteur.

9. Groupe motopropulseur de véhicule automobile selon l'une des revendications précédentes, **caractérisé en ce que** le train épicycloïdal additionnel (138) comprend un planétaire (149) porté par un arbre tubulaire de planétaire (152) et **en ce que** la roue dentée de machine (166) est montée fixe sur l'arbre de planétaire (152).

10. Groupe motopropulseur de véhicule automobile selon l'une des revendications 1 à 8, **caractérisé en ce que** le train épicycloïdal additionnel (138) comprend un planétaire (149) porté par un arbre tubulaire de planétaire (152), **en ce que** la roue dentée de machine (166) est montée folle sur l'arbre de planétaire (152) et **en ce que** ledit arbre porte un accouplement à commande contrôlée (192, 208, 214) pour la liaison entre cet arbre et ladite roue.

11. Groupe motopropulseur de véhicule automobile selon la revendication 10, **caractérisé en ce que** l'accouplement à commande contrôlée (192, 208, 214) coopère avec une surface d'appui (196, 210) portée par la roue dentée de machine (166).

12. Groupe motopropulseur de véhicule automobile selon la revendication 10, **caractérisé en ce que** l'accouplement à commande contrôlée (214) coopère avec une surface d'appui (196) portée par la roue dentée de machine (166) ou avec une surface d'appui (218) portée par une partie fixe du groupe motopropulseur.

13. Groupe motopropulseur de véhicule automobile selon l'une des revendications 1 à 11, **caractérisé en ce que** l'arbre tubulaire de planétaire (152) du train épicycloïdal additionnel porte un fourreau tubulaire (202) relié à la partie fixe (46) du véhicule par accouplement automatique unidirectionnel (162) et **en ce que** ledit arbre porte un accouplement à commande contrôlée (214) pour la liaison entre cet arbre et ledit fourreau.

14. Groupe motopropulseur selon l'une des revendications précédentes, **caractérisé en ce qu'**il comprend une machine motrice/génératrice (22) pour réaliser au moins le déplacement du véhicule.

15. Groupe motopropulseur selon la revendication 14, **caractérisé en ce que** le rotor (24) de la machine (22) est relié à l'arbre de planétaire (100) du train épicycloïdal de machine (90).

## Patentansprüche

1. Kraftfahrzeug-Antriebsstrang, umfassend einen Verbrennungsmotor (10), eine Drehzahlregelung (14), umfassend einen Motorplanetengetriebesatz (26) mit einem Planetenrad (36) und einem Hohlrad (48), die jeweils mit der Welle (12) des Verbrennungsmotors über eine Kupplung mit kontrollierter Steuerung (28, 30) und mit einem festen Teil (46) des Fahrzeugs über eine automatische Einwegkupplung (32, 34) verbunden sind, einen Maschinenplanetengetriebesatz (90), der auf einer Maschinenwelle (92) im Wesentlichen parallel zur Welle (12) des Motors angeordnet ist und den Motorplanetengetriebesatz (26) mit einem Bewegungsübertragungsweg (118, 120, 122, 124) mit einer Antriebsachse (16) verbindet, wobei der Maschinenplanetengetriebesatz ein Planetenrad (94) umfasst, das von einer Planetenwelle (100) getragen wird, ein Hohlrad (126) und einen Planetenträger (108), **dadurch gekennzeichnet, dass** die Drehzahlregelung (14) einen zusätzlichen Planetengetriebesatz (138) und ein Motorzahnrad (168) umfasst, das von der Welle (12) des Motors getragen wird und diese Welle mit einem Maschinenzahnrad (166) verbindet, das von dem zusätzlichen Planetengetriebesatz (138) getragen wird.

2. Kraftfahrzeug-Antriebsstrang nach Anspruch 1, **dadurch gekennzeichnet, dass** der zusätzliche Planetengetriebesatz (138) auf der Maschinenwelle (92) angeordnet ist.

3. Kraftfahrzeug-Antriebsstrang nach Anspruch 1 oder 2, **dadurch gekennzeichnet, dass** das Hohlrad (126) des Maschinenplanetengetriebesatzes mit dem Planetenträger (136) des zusätzlichen Planetengetriebesatzes (138) verbunden ist.

4. Kraftfahrzeug-Antriebsstrang nach Anspruch 1 oder 2, **dadurch gekennzeichnet, dass** der Planetenträger (108) des Maschinenplanetengetriebesatzes mit dem Planetenträger (136) des zusätzlichen Planetengetriebesatzes verbunden ist.

5. Kraftfahrzeug-Antriebsstrang nach Anspruch 1, **dadurch gekennzeichnet, dass** das Hohlrad (126) des Maschinenplanetengetriebesatz von dem festen Teil (46) des Antriebsstrangs getragen wird.

6. Kraftfahrzeug-Antriebsstrang nach Anspruch 1, **dadurch gekennzeichnet, dass** das Motorzahnrad (168) auf der Welle (12) des Motors frei drehbar angebracht ist und dadurch, dass die Welle eine Kupplung mit kontrollierter Steuerung (170) für die Verbindung zwischen dieser Welle und dem Rad trägt.

7. Kraftfahrzeug-Antriebsstrang nach Anspruch 6, **dadurch gekennzeichnet, dass** die Kupplung mit kontrollierter Steuerung eine Scheibenkupplung (170) umfasst.

8. Kraftfahrzeug-Antriebsstrang nach Anspruch 1, **dadurch gekennzeichnet, dass** das Motorzahnrad (168) fest an der Welle (12) des Motors angebracht ist.

9. Kraftfahrzeug-Antriebsstrang nach einem der vorhergehenden Ansprüche, **dadurch gekennzeichnet, dass** der zusätzliche Planetengetriebesatz (138) ein Planetenrad (149) umfasst, das von einer röhrenförmigen Planetenwelle (152) getragen wird, und dadurch dass das Maschinenzahnrad (166) fest an der Planetenwelle (152) angebracht ist.

10. Kraftfahrzeug-Antriebsstrang nach einem der Ansprüche 1 bis 8, **dadurch gekennzeichnet, dass** der zusätzliche Planetengetriebesatz (138) ein Planetenrad (149) umfasst, das von einer röhrenförmigen Planetenwelle (152) getragen wird, dadurch, dass das Maschinenzahnrad (166) frei drehbar an der Planetenwelle (152) angebracht ist, und dadurch, dass die Welle eine Kupplung mit kontrollierter Steuerung (192, 208, 214) für die Verbindung zwischen dieser Welle und dem Rad trägt.

11. Kraftfahrzeug-Antriebsstrang nach Anspruch 10, **dadurch gekennzeichnet, dass** die Kupplung mit kontrollierter Steuerung (192, 208, 214) mit einer Lagerfläche (196, 210) zusammenwirkt, die von dem Maschinenzahnrad (166) getragen wird.

12. Kraftfahrzeug-Antriebsstrang nach Anspruch 10, **dadurch gekennzeichnet, dass** die Kupplung mit kontrollierter Steuerung (214) mit einer Lagerfläche (196) zusammenwirkt, die von dem Maschinenzahnrad (166) getragen wird, oder mit einer Lagerfläche (218), die von einem festen Teil des Antriebsstrangs getragen wird.

13. Kraftfahrzeug-Antriebsstrang nach einem der Ansprüche 1 bis 11, **dadurch gekennzeichnet, dass** die röhrenförmige Planetenwelle (152) des zusätzlichen Planetengetriebesatzes eine röhrenförmige Hülle (202) trägt, die mit dem festen Teil (46) des Fahrzeugs über eine automatische Einwegkupplung (162) verbunden ist und dadurch, dass die Welle eine Kupplung mit kontrollierter Steuerung (214) für die Verbindung zwischen dieser Welle und der Hülle trägt.

14. Antriebsstrang nach einem der vorhergehenden Ansprüche, **dadurch gekennzeichnet, dass** er eine Antriebs-/Generatormaschine (22) umfasst, um mindestens die Bewegung des Fahrzeugs auszuführen.

15. Antriebsstrang nach Anspruch 14, **dadurch gekennzeichnet, dass** der Rotor (24) der Maschine (22) mit der Planetenwelle (100) des Maschinenplanetengetriebesatzes (90) verbunden ist.

## Claims

1. A powertrain for an automotive vehicle comprising a thermal engine (10), a speed variation device (14) including an engine epicyclic gear train (26) with a sun gear (36) and a crown (48), each connected to shaft (12) of the thermal engine by a controlled coupling (28, 30) and to a fixed part (46) of the vehicle by a one-way automatic coupling (32, 34), a machine epicyclic gear train (90) arranged on a machine shaft (92) substantially parallel to engine shaft (12) and connecting engine epicyclic gear train (26) to a track (118, 120, 122, 124) for motion transmission to a drive axle (16), said machine epicyclic gear train comprising a sun gear (94) carried by a sun gear shaft (100), a crown (126) and a planet gear carrier (108), **characterized in that** speed variation device (14) comprises an additional epicyclic gear train (138) and an engine toothed wheel (168) carried by engine shaft (12) and connecting this shaft to a machine toothed wheel (166) carried by additional epicyclic gear train (138).

2. A powertrain for an automotive vehicle as claimed in claim 1, **characterized in that** additional epicyclic gear train (138) is arranged on machine shaft (92).

3. A powertrain for an automotive vehicle as claimed in claim 1 or 2, **characterized in that** crown (126) of the machine epicyclic gear train is connected to planet gear carrier (136) of additional epicyclic gear train (138).

4. A powertrain for an automotive vehicle as claimed in claim 1 or 2, **characterized in that** planet gear carrier (108) of the machine epicyclic gear train is connected to planet gear carrier (136) of the additional epicyclic gear train.

5. A powertrain for an automotive vehicle as claimed in claim 1, **characterized in that** crown (126) of the machine epicyclic gear train is carried by fixed part (46) of the powertrain.

6. A powertrain for an automotive vehicle as claimed in claim 1, **characterized in that** engine toothed wheel (168) is mounted idle on engine shaft (12) and said shaft carries a controlled coupling (170) for connection between this shaft and said wheel.

7. A powertrain for an automotive vehicle as claimed in claim 6, **characterized in that** the controlled coupling comprises a disc clutch (170).

8. A powertrain for an automotive vehicle as claimed in claim 1, **characterized in that** engine toothed wheel (168) is fixedly mounted on engine shaft (12).

9. A powertrain for an automotive vehicle as claimed in any one of the previous claims, **characterized in that** additional epicyclic gear train (138) comprises a sun gear (149) carried by a tubular sun gear shaft (152) and machine toothed wheel (166) is fixedly mounted on sun gear shaft (152).

10. A powertrain for an automotive vehicle as claimed in any one of claims 1 to 8, **characterized in that** additional epicyclic gear train (138) comprises a sun gear (149) carried by a tubular sun gear shaft (152), machine toothed wheel (166) is mounted idle on sun gear shaft (152) and said shaft carries a controlled coupling (192, 208, 214) for connection between this shaft and said wheel.

11. A powertrain for an automotive vehicle as claimed in claim 10, **characterized in that** controlled coupling (192, 208, 214) cooperates with a bearing surface (196, 210) carried by machine toothed wheel (166).

12. A powertrain for an automotive vehicle as claimed in claim 10, **characterized in that** controlled coupling (214) cooperates with a bearing surface (196) carried by machine toothed wheel (166) or with a bearing surface (218) carried by a fixed part of the powertrain.

13. A powertrain for an automotive vehicle as claimed in any one of claims 1 to 11, **characterized in that** tubular sun gear shaft (152) of the additional epicyclic gear train carries a tubular sleeve (202) connected to fixed part (46) of the vehicle by a one-way automatic coupling (162) and said shaft carries a controlled coupling (214) for connection between this shaft and said sleeve.

14. A powertrain for an automotive vehicle as claimed in any one of the previous claims, **characterized in that** it comprises a driving/generator machine (22) for imparting at least motion to the vehicle.

15. A powertrain for an automotive vehicle as claimed in claim 14, **characterized in that** rotor (24) of machine (22) is connected to sun gear shaft (100) of machine epicyclic gear train (90).
